# EUROPEAN PATENT APPLICATION

(11) **EP 4 717 411 A1**
(43) Date of publication of application: **01.04.2026**
(21) Application number: 25205394.7
(22) Date of filing: 29.09.2025
(51) Int. Cl.: B25J 5/00, B25J 19/00, B25J 19/02

(54) **COBOT ON A MOBILE PLATFORM TRANSPORTED TO WORKSTATIONS VIA AN AUTONOMOUS TRANSPORT ROBOT**

(30) Priority: 30.09.2024 EE 202400021
(71) Applicant: Tallinna Tehnikakõrgkool, 10135 Tallinn Harju maakond (EE)
(72) Inventor: Vaher, Kristo, 51011 Tartu (EE)
(74) Representative: Koitel, Raivo

(57) **Abstract**

The subject of the invention is a transport system for autonomously relocating a collaborative robot to different working positions and precisely positioning it at different workstations 8. The transport system comprises an autonomous transport robot 1, a collaborative robot 2 equipped with a machine vision camera 7, which is mounted on a transportation rack 3 provided with an energy management system, wherein the transportation rack 3 comprises wheeled support posts 4 and telescopic support legs 5. The energy management system comprises a battery with charging and battery management system, as well as energy conversion and control equipment. The autonomous transport robot 1 and collaborative robot 2 of the transport system are separate and independent from each other and autonomous transport robot 1 and the transport frame 3 of the transport system are independent from each other.

## Description

### Technical field

The invention belongs to the field of robotics, specifically relating to a transport system that autonomously relocates a collaborative robot between different working positions and precisely positions the collaborative robot at different workstations.

### Prior Art

A known docking device (CN219134140U, RV Automation Tech Company Ltd., published 06.06.2023) comprises an autonomous transport robot and a logistics cart equipped with a butt-joint connector plug, with a number of telescopic connecting rods placed in corresponding locations matching the connectors of the autonomous transport robot. The autonomous transport robot is equipped with a laser radar and the logistics cart is equipped with an infrared reflective adhesive tape. The laser radar is positioned by scanning the infrared reflective adhesive tape. The logistics cart includes a chassis, the four corners of which are each equipped with a support leg, and each support leg is equipped with a wheel. The autonomous transport robot is also equipped with a main control computer connected to the laser radar through a secondary power supply and a signal line. The autonomous transport robot has a docked connection with the logistics cart, and the autonomous transport robot drives the logistics cart. The drawback of this solution is that the logistics cart lacks the capability to relocate a collaborative robot between work positions and to position it relative to workstations.

A device for autonomous transport of logistics carts is also known (US2017072558, Omron Adept Tech Inc, published 16.03.2017), wherein in one embodiment the autonomous transport robot moves to a designated location and detects the presence of a compatible wheeled cart. The autonomous transport robot then moves together with the cart into a precisely aligned position, locks onto the cart and transports it to the designated destination. The drawback of this solution is that the logistics cart lacks the capability to relocate a collaborative robot between different work positions and to position it relative to workstations, and the logistics cart also lacks an energy system.

By its technical nature closest to the invention is the solution (US2024009856, Lam Res Corp, published 11.01.2024) which comprises a system and method for automating routine maintenance operations of various process modules used in manufacturing facilities. The automation is carried out by means of a robotic arm mounted on a mobile cart. The robot system comprises a robotic arm mounted on the frame of a mobile robotic arm, allowing the robotic arm to be moved within the manufacturing facility. The cart frame has a top, a base, and sides between the top and the base. The mobile cart is provided with wheels mounted on the frame base. The cart frame is configured to house a number of components such as a computer, a robot controller, an AC power supply, a DC power supply for powering the computer, the robot controller, and other components placed on the cart frame, an auxiliary power supply (e.g., an uninterruptible power supply - UPS), etc. One end of the robotic arm comprises a vision system including a light source and one or more cameras. This solution concerns the transport of a collaborative robot by a human. It is not an autonomous solution. It also lacks automatic system charging.

### Summary of the invention

The objective of the transport system that autonomously relocates a collaborative robot between different working positions and precisely positions it at different workstations is to develop a technical solution in which the transport robot and the collaborative robot are independent of each other and both are capable of working independently. The transport robot and the collaborative robot are connected via a wireless communication device.

The presented transport system comprises an autonomous transport robot and a collaborative robot equipped with a machine vision camera, placed on a transportation rack provided with an energy management system, wherein the autonomous transport robot and the transportation rack are independent of each other.

The collaborative robot has a non-working position during transportation and a working position relative to the workstation, and the collaborative robot is constantly ready for work.

The transportation rack is equipped with wheeled support posts and telescopic support legs for transporting the collaborative robot, wherein in the non-working position of the collaborative robot the transportation rack rests on the base surface via the wheeled support posts, and in the working position the transportation rack rests on the base surface via the telescopic support legs.

The transportation rack is provided with a locking device for locking the transport robot, whereas the transportation rack is locked to the transport robot by the locking device in the non-working position of the collaborative robot and unlocked when in the working position of the collaborative robot.

In the working position, the collaborative robot is positioned relative to the workstation along the x-, y-, and z-axes by means of the machine vision camera with an accuracy of ±0.01-0.05 mm.

The transportation rack is provided with a connector for supplying power to the collaborative robot and charging at least one battery. The connector is to be connected to a socket at the workstation, and the connector is inserted into the socket at the workstation by the collaborative robot.

The transport system comprises various devices for software-based (MES software) and wireless (e.g., WiFi) communication between them, namely an energy management system comprising at least one battery with charging and Battery Management System (BMS), as well as energy conversion and control devices.

For a workstation without wireless communication capability, an additional computer is installed, allowing the collaborative robot to communicate with the workstation via the wireless communication solution.

### List of drawings

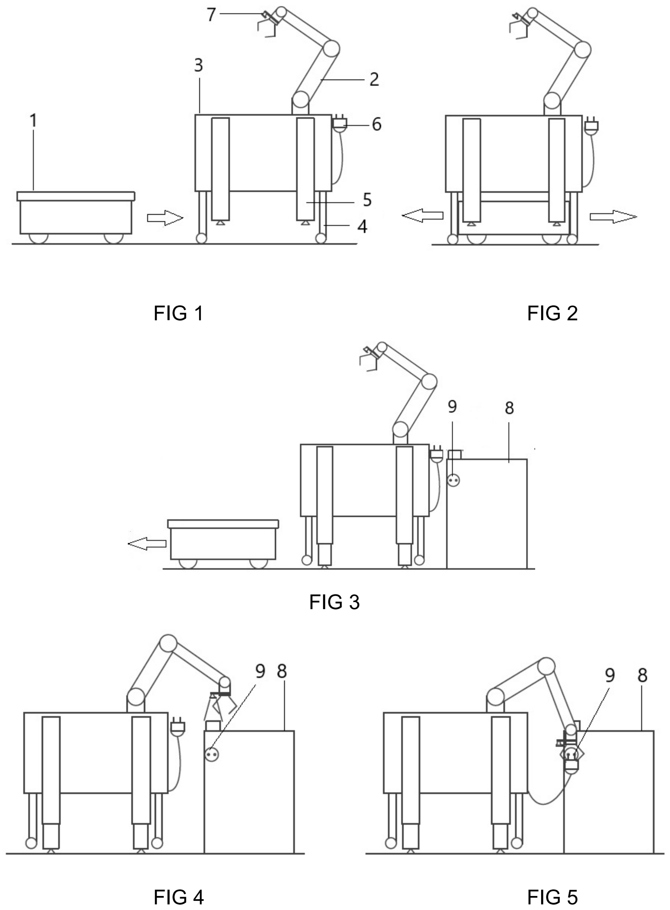

Fig 1 to Fig 5 illustrate the general solution of the transport system:
Fig 1 shows the transport robot moving underneath the collaborative robot placed on the transportation rack supported by wheels, and coupling it together with the transportation rack to itself;
Fig 2 shows the transport of the collaborative robot, which is in a non-working position on the transportation rack supported by wheels, by the transport robot;
Fig 3 shows the collaborative robot in a working position, with the support legs of the transportation rack lowered onto the ground and its wheels lifted from the base surface;
Fig 4 shows the position of the collaborative robot relative to the workstation, positioned by machine vision using a marker on the workstation;
Fig 5 shows the collaborative robot that is plugged in, after being positioned in the working position relative to the workstation, for supplying power to the collaborative robot and charging the battery/batteries;
Fig 6 shows the communication scheme between the transport robot, the collaborative robot, and the workstation using a wireless communication solution (e.g., a WiFi network).

### Embodiment of the invention

The transport system for autonomous relocation and precise positioning of a collaborative robot comprises the following units: an autonomous transport robot 1 and a collaborative robot 2, which is placed on the collaborative robot transportation rack 3.

The autonomous transport robot 1 and the collaborative robot 2 are independent and separate from each other, and communicate with each other via a wireless communication solution (e.g., WiFi). The autonomous transport robot 1 autonomously relocates the collaborative robot 2 located on the transportation rack 3 to the required workstation into the working position, leaves the collaborative robot 2 to operate at the workstation 8, and then autonomously proceeds to carry out a new (transport) task, such as transporting another collaborative robot 2 or bringing parts from a warehouse.

The transportation rack 3 is equipped with wheel-supported posts 4 (the preferred embodiment includes four support posts 4), on which the transportation rack 3 rests during the relocation of the collaborative robot 2 either by the autonomous transport robot 1 or manually, or on which it rests in a non-working position.

The transportation rack 3 is equipped with telescopic support legs 5 (the preferred embodiment includes four support legs 5), on which the transportation rack 3 rests when the collaborative robot 2 is in the working position at the workstation 8.

The transportation rack 3 is provided with a locking device (not shown in the figures) for engaging and fastening the transportation rack to the autonomous transport robot 1.

An energy management system (not shown in the figures) is placed in the housing of the transportation rack 3, ensuring uninterrupted power supply to the collaborative robot 2. The energy management system comprises at least one battery with charging and battery management system (BMS), energy conversion and control devices, and a wireless communication solution (preferably in a WiFi network). Additionally, the transportation rack 3 has a special connector 6 for connection to a socket 9 located at the workstation 8, to provide power supply to the collaborative robot 2 and to charge the battery or batteries. Preferably, the collaborative robot 2 receives the energy necessary for operation from the battery or batteries, which are recharged as necessary via the socket 9 at the workstation 8 connected through connector 6. Optionally, the collaborative robot 2 may also be powered directly via connector 6 connected to the socket 9 at the workstation 8.

The collaborative robot 2 is constantly ready for work, including during transportation, i.e., the collaborative robot 2 can be used at different times at different workstations 8 for performing various tasks.

The collaborative robot 2 is equipped with a machine vision camera 7, which enables positioning of the collaborative robot 2 along the x-, y-, and z-axes in the working position relative to the workstation 8, with the accuracy required for the collaborative robot 2 to perform its tasks. If the transport robot relocates the collaborative robot 2 together with its transportation rack 3 to the working position at the workstation 8 not very accurately (approximately ±10-50 mm), the machine vision ensures positioning accuracy at the level of approximately ±0.01-0.05 mm, sufficient for servicing the workstation 8. Positioning along the x-, y-, and z-axes also allows correction of the collaborative robot 2 position relative to the workstation 8 in the working position, compensating for unevenness of the base surface or an incorrect placement of a telescopic support leg 5 (e.g., if a larger object is underneath it).

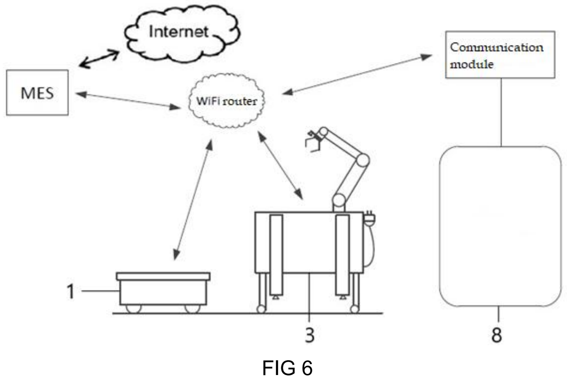

One part of the transport system is the wireless communication solution (in the preferred embodiment its own WiFi network) for communication between the different devices (see Fig 6). This is required if there is no local network or if newcomers are not allowed into the local network, so that the functioning of the transport system is not hindered. For the communication solution, a communication beacon, such as a WiFi beacon, is established, and all system components communicate via software through it. If necessary, the transport system can also be connected to the factory network, either via the factory WiFi or by cable.

It is also possible to simultaneously connect multiple transport robots 1, collaborative robots 2, and workstations 8 to the system, all of which communicate with each other via software and wireless communication. If a workstation lacks wireless communication capability, for example older devices without WiFi capability, then an additional computer is added to the workstation 8, enabling a workstation 8 without wireless communication (e.g., WiFi) to communicate with the collaborative robot 2 using the wireless communication solution.

The workstation may be, for example, a CNC (Computer Numerical Control) machine, an assembly device, a milling machine, or similar equipment.

One part of the transport system is MES (Manufacturing Execution System) software. This software allows planning the movements of the transport system's devices (creating a movement plan for the machines according to the production plan), coordinating data exchange between machines, assigning work instructions to machines, and collecting feedback. The MES software can also be interfaced with the factory's own control software through additional development.

In the preferred embodiment of the invention, MIR 100 transport robot, UR 10 collaborative robot, Cognet IS 2000M machine vision camera and Roeq locking device are used.

The transport system operates as follows.

The autonomous transport robot 1 moves the collaborative robot 2 on the transportation rack 3 within the designated area according to a predefined plan.

The transportation rack 3 rests on wheeled support posts 4 when the collaborative robot 2 is in the non-working position, allowing maneuvering both by the collaborative robot 2 and manually by a human.

The transport robot 1 drives under the transportation rack 3, locks it to itself with a locking device, and transports the collaborative robot 2 on the transportation rack 3 to the required workstation 8 into the working position, during which the transportation rack 3 rests on wheeled support posts 4. When the transport robot 1 arrives at the workstation 8, it releases itself from the transportation rack 3 and departs.

The transportation rack 3 is equipped with telescopic support legs 5, which, when the collaborative robot 2 is in the working position, are autonomously pressed against the base surface, simultaneously lifting the transportation rack 3 so that the wheeled support posts 4 are raised above the base surface (they remain suspended in the air). As a result, the transportation rack 3 becomes rigid and stable, effectively forming a working frame.

Using the machine vision camera 7, the collaborative robot 2 on the transportation rack 3 is positioned along the x-, y-, and z-axes relative to the workstation 8 with the accuracy required for its work.

The energy management system continuously monitors the energy level in the batteries. If battery charging is required, the collaborative robot 2, positioned in the working position at the workstation 8, connects to the electrical network via a special connector 6 and the socket 9 at the workstation 8 before starting work.

When the collaborative robot 2 ends its operation at the workstation 8, the transportation rack 3 autonomously lifts its telescopic support legs 5, causing the transportation rack 3 to rest on the base surface via wheeled support posts 4, thereby making it transportable to a new working position. The autonomous transport robot 1 drives under the transportation rack 3, locks it to itself, and transports the collaborative robot 2 to the next working position. Before transportation, in the event of a plug connection, the collaborative robot 2 disconnects the connector 6 from the socket 9. If necessary, the collaborative robot 2 can also be transported manually by a human between different workstations 8.

Advantages of the presented transport system:
- the autonomous transport robot and the transportation rack with the collaborative robot are independent and separate, allowing both to operate independently, which increases the efficiency of both resources;
- while the collaborative robot is working at a workstation in the working position, the autonomous transport robot can simultaneously perform other (transport) tasks;
- the collaborative robot can be used at different times at different workstations for performing various tasks;
- there is no direct need for human intervention, as the entire transport system operates autonomously - the collaborative robot is moved from one working position to another autonomously by the transport robot, and machine vision ensures accurate positioning relative to the workstation;
- the batteries on the transportation rack are charged while the collaborative robot is in the working position at the workstation, during its operation (there is no need to remove the transportation rack for charging);
- different combinations of autonomous transport robots and collaborative robots can be used depending on production/factory needs.

## Claims

1. Transport system for autonomous relocation of a collaborative robot between different working positions and precise positioning at different workstations (8), the system comprises an autonomous transport robot (1), a collaborative robot (2) equipped with a machine vision camera (7) placed on a transportation rack (3) provided with an energy management system, the transportation rack (3) comprising support posts and support legs and wheels for transporting the collaborative robot (2), and a locking device for the transportation rack (3), and various devices interconnected via software and a communication solution, **characterized in that:**
- the transport robot (1) and the collaborative robot (2) are independent and separate from each other and the transport robot (1) and the collaborative robot (2) are connected to each other via a wireless communication device;
- the autonomous transport robot (1) and the transportation rack (3) are independent from each other;
- the transportation rack (3) has wheeled support posts (4);
- the transportation rack (3) has telescopic support legs (5);
- the transportation rack (3) has a locking device for locking the transport robot (1);
- the energy management system comprises at least one battery with a charging and battery management system (BMS), energy conversion and control devices;
- the transportation rack (3) has a connector (6) for supplying power to the collaborative robot (2) and for charging at least one battery;
- in the working position, the collaborative robot (2) is positioned relative to the workstation along x-, y-, and z-axes by the machine vision camera (7);
and the collaborative robot (2) has a working position relative to the workstation (8) and the collaborative robot (2) has a non-working position during transport.

2. The transport system according to claim 1, **characterized in that** the transportation rack (3) rests on wheeled support posts (4) in the non-working position of the collaborative robot (2) and the transportation rack (3) rests on telescopic support legs (5) in the working position.

3. The transport system according to claims 1 and 2, **characterized in that** the transportation rack (3) is locked to the transport robot (1) in the non-working position of the collaborative robot (2) and unlocked in the working position of the collaborative robot (2).

4. The transport system according to claims 1 to 3, **characterized in that** the collaborative robot (2) is positioned with an accuracy of ±0.01-0.05 mm.

5. The transport system according to claims 1 to 4, **characterized in that** the connector (6) is to be connected to a socket (9) at the workstation (8).

6. The transport system according to claim 5, **characterized in that** the connector (6) is inserted into the socket (9) at the workstation (8) by the collaborative robot (2).

7. The transport system according to claims 1 to 6, **characterized in that** it comprises MES software.

8. The transport system according to claims 1 to 7, **characterized in that** an additional computer is installed at the workstation (8) to enable communication between the collaborative robot (2) and the workstation (8) via the wireless communication solution.

9. The transport system according to claims 1 to 8, **characterized in that** the wireless communication solution is WiFi.
